Europäisches Patentamt

(19) European Patent Office

Office européen des brevets

(11) Publication number: **0 177 101**
**A2**

# (12) EUROPEAN PATENT APPLICATION

(21) Application number: **85201563.5**

(22) Date of filing: **30.09.85**

(51) Int. Cl.⁴: **B 29 C 35/16**
**//B29L30:00**

(30) Priority: **03.10.84 IT 2296684**

(43) Date of publication of application:
**09.04.86 Bulletin 86/15**

(84) Designated Contracting States:
**DE FR GB**

(71) Applicant: **Mariuzzo, Gino**
**Via Ticino, 6**
**I-20095 Cusano Milanino (Milano)(IT)**

(71) Applicant: **Mariuzzo, Danilo**
**Via Grigna, 11**
**I-20052 Monza (Milano)(IT)**

(72) Inventor: **Mariuzzo, Gino**
**Via Ticino, 6**
**I-20095 Cusano Milanino (Milano)(IT)**

(72) Inventor: **Mariuzzo, Danilo**
**Via Grigna, 11**
**I-20052 Monza (Milano)(IT)**

(74) Representative: **Faraggiana, Vittorio, Dr. Ing. et al,**
**Ingg. Guzzi e Ravizza S.r.l. Via Boccaccio, 24**
**I-20123 Milano(IT)**

(54) Improved tyre cooling system.

(57) A tyre cooling system comprises a tyre support element which leaves the interior of the tyre substantially free. Cooperating with the tyre support element is an annular-mouthed nozzle movable with respect to it so as to be positioned coaxially within the tyre and with the plane containing the annular mouth substantially coincident with the median transversal plane of the tyre.

Fig. 1

IMPROVED TYRE COOLING SYSTEM

It is known that when tyres are removed from the forming mould they require substantial cooling. For this purpose, according to the conventional art, they are placed on a discontinuous conveyor, comprising for istance spaced rollers, and a stream of air directed axially to each tyre is applied to them, for example by a ducted fan.

The complex geometry of the tyre, which is open toroidal, and the low heat conductivity of rubber, mean that the cooling must be slow; this entails high energy consumption and the need for large spaces to accommodate the tyres being cooled. When output is high, as is usual in this type of manufacture, such accommodation volumes can be very great. Additionally, very large volumes of air are required to form a cooling airstream that impinges on the whole of each tyre, and these call for high energy consumption for pumping. It thus becomes unfeasible to refrigerate the airstream to temperatures lower than room temperature, because of the power that would be required by the refrigerating system.

The present invention provides a solution to these problems by embodying a system that gives an efficient cooling of the tyres and at the same time keeps cooling time and air volume to a minimum. In this way it becomes possible to refrigerate the cooling air when this is desirable in order to further reduce the time within which a tyre is required to reach low temperature. To achieve the purposes mentioned, and others that will become evident from the description that follows, the present invention embodies a tyre cooling system which comprises a tyre support element which leaves the interior of the tyre substantially free, an annular-mouthed nozzle which is movable with respect to the said support element so as to be positioned coaxially to it and with the plane containing the annular mouth substantially coincident with the median transversal plane of the tyre.

The objectives and advantages of the present invention wilo become more apparent from an examination of the following illustrative but not limiting form of embodiment thereof, with reference to the appended drawings, in which:

Figure 1 is an elevational view of a cooling system embodied according to the principles of the present invention; and

Figure 2 is an enlarged view of the behaviour of the cooling airstream impinging on the interior of a tyre.

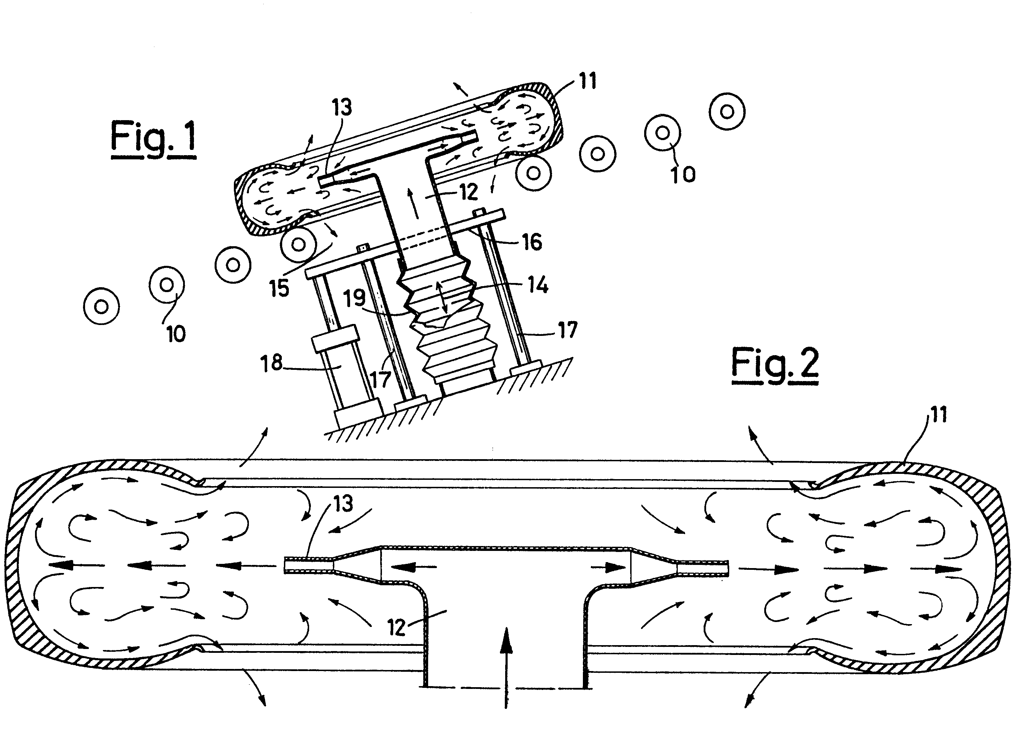

With reference to Figure 1 of the drawings, the system according to the invention comprises a roller-conveyor onto which the tyres 11 to be cooled are placed immediately after they have been mould-formed.

Each tyre is sent from the mould-forming station to a cooling station which comprises a nozzle 12 provided with an annular mouth 13. The nozzle 12 is axially movable in the directions indicated by the arrow 14 between a lowered non-operative position (not shown) below the roller-conveyor 10 and the raised operative position shown in Figure 1, above the roller-conveyor 10, in which latter position the annular mouth 13 lies on the same median transversal plane as the tyre, coaxially to it.

As can clearly be seen from Figure 1 of the drawings, the nozzle 12 can move into the raised, operative position with its mouth 13 centred within the tyre through a passageway 15 formed in the roller-conveyor 10, which will in any case ensure unfailing support for the tyre. Said passageway 15 can for example be formed simply by the absence of some rollers from the roller-conveyor 10, or by mounting centre-lowered rollers or even lateral cantilever rollers adapted to leave a central space free for the passage of the nozzle 12.

The axial movement of the nozzle 12 can be caused in any convenient manner. In Figure 1, as an illustrative but not limiting functional scheme, the nozzle 12 is carried by a slide 16 translatable on guides 17 as the result of the action of an actuating cylinder 18. Air is fed to the nozzle 12 through a bellows-hose 19. The functioning of the system according to the invention will be evident from what has been described above, with particular reference to Figure 1 of the drawings. Spcifically in regard to such functioning, the remarkable efficiency of the cooling obtained according to the invention is the result of the rational flow regimen of the cooling airstream, of which an exemplifying schematic is shown in Figure 2. The ring of air which is ejected at a high velocity from the mouth 13 penetrates into the interior toroidal volume of the tyre to the point of striking the lateral interior surface thereof. The laminas of air most adherent to the surface of the tyre tend to be expelled at the tyre outlet, while the innermost laminas, which have lower temperature in that they have been less involved in the cooling, are attracted back into the tyre through an ejector effect caused by the flow from the nozzle. The thermal capacity of all the air is in this manner exploited in a way adequate for removal of the heat of the tyre.

This permits operations to be performed with small air throughputs such as are adapted to be refrigerated with a more than accpeptable economic outlay - both as to system costs and as to running costs.

The benefit to be gained from the system according to the invention will be immediately evident to persons skilled in the art. It has in a specific application been experimentally found that when operating at around 300 cu.m./h of air refrigerated to 15°C, the system according to the invention permits a better cooling effect in terms of time and efficiency than that obtained using a traditional lateral-flow system operating at around 7,000 cu.m./h at room temperature, such a large volume of air being uneconomical to refrigerate.

Considering the difference between the volumes of air which must in the two cases be pumped to set up a flow of sufficient velocity, the degree of saving that can be made is self-evident.

A satisfactory dynamic effect can be obtained in the system according to the invention with a velocity of the air leaving the nozzle of approximately some tens of metres per second, e.g. around 40 m/sec, and with a nozzle mouth height of a few millimetres, e.g. 1 to 3 mm for nozzles suitable for current automotive vehicle tyre sizes.

0177101

Nozzle air feed pressures can thus be kept low, i.e. around 70 to 120 mm of water column and the power used for pumping will therefore be moderate only.

Optimal nozzle diameter with respect to the tyre bead heel is experimentally found for each specific application and to a certain extent also depends on tyre width, in view of the flow regimen that has to be obtained, which is illustrated in Figure 2.

As an indication, it will generally be advantageous for nozzle diameter to be greated than three-fifths of the diameter of the tyre at the heel.

As mentioned previously, the specific indications as to quantity and dimensions, as also the constructional details regarding forms of embodiment heretofore described, do not limit the scope of the present invention, but serve solely to better identify the basic principles by which it is governed.

The exemplifying data that have been reported can be amply modified in relation to the specific application, having regard also to the size and type of tyre to be treated, in order to obtain the desired purposes.

CLAIMS

1. A tyre cooling system comprising a tyre support element which leaves the interior of the tyre substantially free, and an annular-mouthed nozzle which is movable with respect to said element so as to be positioned coaxially to it and with the plane containing the annular mouth substantially coincident with the median transversal plane of the tyre.

2. A system according to claim 1, characterized in that said tyre support element is a roller-conveyor with a passage formed in it adapted to leave the interior are of the tyre free.

3. A system according to claim 1, characterized in that said nozzle is disposed below said tyre support element and moves axially between a lowered non-operative position and a raised operative position, actuating means being provided for controlling the translation of said nozzle.

Fig.1

Fig.2